# EUROPEAN PATENT SPECIFICATION

(11) **EP 2 450 421 B1**
(45) Date of publication and mention of the grant of the patent: **16.04.2014**
(21) Application number: 10425346.3
(22) Date of filing: 03.11.2010
(51) Int. Cl.: C10L 5/36, C10L 5/46, F26B 17/10

(54) **METHOD FOR THE PRODUCTION OF A FUEL FROM WASTE**
VERFAHREN ZUR HERSTELLUNG VON BRENNSTOFF AUS ABFALLSTOFFEN
PROCEDE DE PRODUCTION D'UN COMBUSTIBLE A PARTIR DE DECHETS

(43) Date of publication of application: 09.05.2012
(73) Proprietor: BI ENERGY s.r.l., 56121 Pisa (PI) (IT)
(72) Inventor: Del, Carlo Dominico, 55045 Marina di Pietrasanta (LU) (IT); Del, Carlo Felicino, 55016 Porcari (LU) (IT)
(74) Representative: Turini, Laura

(56) References cited:
- WO-A1-2007/037768
- GB-A- 191 200 429
- US-A- 2 017 586
- US-A- 3 823 487
- US-A- 4 692 167

## Description

### Technical Field

The present invention concerns the technical field relative to the production of energy.

In particular, the invention refers to an innovative energetic plant with which urban solid waste (USW), preferably non-separated, are treated appropriately for obtaining a final WDC (Waste Derived Combustible).

### Background Art

Plants for the treatment of urban solid waste (USW) have been known for some time, which are worked in order to obtain a high-calorific power final dry combustible (WDC).

The plants known include a first phase of waste collection, generally in a ditch, and drawing of the same so as to direct it along a transformation path. In particular, a first phase of grinding and screening is included through which the waste is triturated and subsequently separated into humid part (generally coming from organic waste) and dry part (generally coming from inorganic waste). At this point a drying treatment through which the liquid contained in the product is dried so that its calorific features increase significantly and the product becomes ready to be sent to a waste-to-energy plant for the production of thermal energy through combustion.

In accordance with the state of the art, therefore, the level of purification of the waste to be treated, which influences the calorific power of the WDC obtained, is not optimal.

Above all, the cleaning of the impurities present such as various metals or plastics is not optimal, therefore the WDC obtained is basically "polluted" and not pure. It is evident that this causes not only a lowering of the combustion efficiency but also increases the level of environmental pollution when the WDC will be subsequently burnt.

Moreover, the operation of drying of the waste is neither optimal. This generally takes place through the use of a drying chamber where the product is maintained at drying temperature for several days. It is evident that such a procedure is absolutely inconvenient since, apart from the long drying time needed that renders the process discontinuous, there is the possibility of running the risk of a continuous contact of the waste while drying with the external air each time the chamber is opened. It is known that air contains a certain degree of humidity that inevitably obstacles the drying process itself and therefore the quality of the final product obtained.

In other cases, conveyor belts are used which conduct the product along a drying path into a high temperature drying chamber. Nevertheless, neither in this case the process results optimal since the material piled up on the belt has a drying permanence time limit based on the pre-chosen speed of the belt and not on the quality or quantity of material. In that sense, the heap of product arranged on the belt will have a drying gradient that is externally maximum and decreases towards the core of the material. In such a manner, the core of the heap tends to remain humid or dries more slowly, while the outer part risks to catch fire. Such effect can result more pronounced in the case of particularly stacked fine grain.

Also in this case, therefore, the drying process does not result optimal.

Moreover, since the quality of the combustible obtained is not optimal due not only to an inefficient separation from the air but also to the presence of hardly removable impurities, such WDC production plants limit themselves only to the production of a combustible solid destined to a waste-to-energy plant process. Therefore, it is not included at the moment a use of such WDC, even partial, in a gasification process placed in line with the WDC production cycle and directed to the production of electric current able to exploit part of the heat obtained from the gasification to lower the energetic consumption required by the WDC production process itself.

In US4692167 is disclosed an apparatus for obtaining a solid fuel from waste that solves the above mentioned problems.

In US4692167 is disclosed a dryer comprising a plurality of chambers arranged in succession and in fluid communication between them through a passage. The waste, injected into the drier, is dragged from a drying fluid from the entry towards the exit of the chamber. In this manner the waste, introduced into the first chamber, passes to the subsequent chamber when a reduction of its weight is obtained due to the progressive drying obtained with the action of the fluid. In fact, when a certain degree of humidity has been dried, the material reduces its weight and in this manner it can be intercepted and transported by the drying fluid towards the subsequent chamber through the passage.

### Disclosure of invention

It is therefore the aim of the present invention to provide a process and a relative plant that solves at least in part the above mentioned inconveniences.

In particular, it is the aim of the present invention to provide a process for the treatment of non-separated waste, and relative plant, that allows to dry and separate from the air the treated waste in such a way as to obtain a high-calorific power WDC finished product.

It is also the aim of the present invention to provide a process for the treatment of non-separated waste, and relative plant, which allows to obtain a final WDC purified from pollution agents such as heavy metals and plastics.

It is also the aim of the present invention to provide a method of treatment of the non-separated waste, and relative plant, which eventually allows to exploit the purity of the WDC obtained, its high calorific power and its compactness to gasify it in order to obtain a Syngas to be burnt to produce electric energy.

Last, it is the aim of the present invention to realize a closed cycle of such a combustion so that the heat obtained from the said combustion of the Syngas can be used to feed the drying process of the waste and therefore lower the consumption required for the production of the WDC itself.

These and other aims are therefore obtained with the present method for the treatment of waste (USW), preferably non-separated, for the production of a solid derived combustible (WDC), in accordance with claim 1.

The method includes the sending of the waste (USW) along a transformation path that comprises the operations of drying of the waste and its subsequent compaction to obtain the solid (WDC).

The quality of the WDC is influenced by various parameters such as its degree of drying, its compaction and its purity. The higher the degree of drying is, that is the lower the quantity of liquids present inside it is, the higher its calorific power is.

Unlike traditional drying processes, the present method comprises the injection into a drying section (6) of a drying fluid and of the waste to be dried so that the waste is dragged by the fluid from the entry (9) of the drying section (6) towards the exit (10). The drying section (6) comprises more than two chambers (15) arranged in succession and in fluid communication between them through a progressively widened section passage (11) from a chamber (15) towards the subsequent one. In such a manner, the waste that enters in the drying section (6) from one side (9) passes to the subsequent chamber towards the exit only when it reaches a lightening, due to the progressive drying for the maintenance in the chamber in question, which allows it to be lifted and transported away from the drying fluid towards the subsequent chamber through the appropriately calibrated passage (11), and wherein, further, inside a part of all the chambers (15), an intermediate baffle (16) is provided, the baffle being positioned such that to intercept the passage (11) and being positioned orthogonally respect to the direction of the passage (11).

The calibration of the passage allows in fact to select the permanence of the fluid in each chamber on the basis of the quantity of desired drying.

Each chamber has therefore a baffle (8) provided with an appropriately calibrated opening and that forms the said passage 11, which serves as a sieve. The openings of the baffles are all in line among them and progressively growing in such a way as to form a sort of cone that widens from the entry section towards the exit and arranged along the longitudinal central axis of section 6.

Advantageously, the drying fluid and the waste are introduced in the drying section (6) from the same part, that is in equi-current.

Advantageously, after the said drying operation of the waste, an operation of separation is further comprised of the drying fluid of the waste from the waste dried into an aeraulic separator (30). It is therefore comprised, through the dragging of the drying fluid with which it has mixed in the section (6), an entry of the waste in the separator (30) through an entry (32) of the separator (30) itself and a contextual suction from an exit (31) placed at a different height with respect to the entry part (32). Such a height is at least equal or greater with respect to the diameter of the section of the separator (30) and, moreover, the separator has a much greater section with respect to its entry section (32). In such a manner, the flow of waste dragged into the separator undergoes a drastic speed fall in correspondence of its entry so that it falls by gravity to the bottom of the separator (30) while, contextually, the drying flow is suctioned through the exit (31).

This process therefore allows to obtain an absolutely dried and very compact WDC, since it has been absolutely separated from the drying flow.

Advantageously, before the said drying operation, an operation of grinding of the waste and its subsequent screening is comprised in such a way as to obtain humid-organic waste separated from the dry waste and form two distinct transformation paths.

Advantageously, the screening operation comprises the advancement of the waste along a rotating-drum screen having a net provided with screen holes in such a way that the parts that have a smaller size than the diameter of the holes of the screened net and greater weight fall towards the bottom of the machine on the conveyor belt (104'), while the parts having a bigger size than the diameter of the holes of the screened net and minor weight advance towards the belt (104") forming two distinct paths of humid-organic waste and dry waste.

The whole of such operations, among which there is also an operation of cyclone separation after the screening for eliminating heavy aggregate such as metals and PVC, allow to obtain a very compact and pure WDC, and with high physical and chemical characteristics. All this, in an absolutely innovative way, allows the use of the WDC obtained to produce a closed-cycle Syngas with the said method.

In particular, at the end of the production process of the solid WDC, a subsequent gasification operation of the solid produced can be comprised to obtain a Syngas and a subsequent combustion of the Syngas obtained for the production of heat and electric energy.

Advantageously, the heat produced by the combustion of the Syngas is injected into a diathermic gas/oil exchanger to heat an organic fluid that performs a thermal dynamic cycle inside a turbo-generator to produce electric current.

Advantageously, the heat produced by the combustion of the Syngas can be re-circulated at least in part into a closed circuit (62) to re-conduct it to the drying section (6), allowing a significant energetic saving.

It is also described here a plant for the production of a solid derived combustible (WDC) from waste (USW) along a transformation path and comprising:
- A drying section (6) of the waste and;
- A compaction section (30) of the waste to obtain the solid (WDC);
and wherein the drying section comprises an entry (9) into which a drying fluid, preferably air, and the waste to be dried is injected in such a way that the waste is dragged by the fluid towards the exit section (10), the drying section (6) further comprising more than two chambers (15) arranged in succession and in fluid communication between them through a progressively widened section passage (11) from a chamber (15) towards the subsequent one in such a way that the waste in the entry of the drying section (6) from one side (9) passes to the subsequent chamber through the said passage (11) when a reduction of weight is obtained due to the progressive drying because of the permanence in the said chamber so as to lighten the waste so that it can be intercepted and transported away from the drying fluid towards the subsequent chamber through the passage (11), and wherein, further, inside a part of all the chambers (15), an intermediate baffle (16) is provided, the baffle being positioned such that to intercept the passage (11) and being positioned orthogonally respect to the direction of the passage (11).

Advantageously, the entry (9) comprises an entry for the fluid and an entry for the waste independent from each other and arranged on the same side of the drying section (6) so as to form an equi-current flow.

Advantageously, each chamber (15) is separated from the subsequent one by a baffle (8) having an opening (11), each opening widening progressively from the entry (9) towards the exit (10) and wherein, further, the drying section (6) comprises one or more than one mechanical mixers (20) to remove the waste fallen on the bottom of the section (6) and let it in again in the drying flow.

Advantageously, before the said drying section (6), a screening section (4) of the waste is comprised so as to obtain humid-organic waste separated from the dry waste and form two distinct transformation paths.

Advantageously, after the said drying section (6) the plant further comprises an aeraulic separator (30) to separate the drying gas of the waste from the dried waste and comprising an entry (32) for the drying and waste fluid, a suction section (31) of the drying fluid and a collection base of the waste separated from the drying fluid, the said separator having a much greater section with respect to the entry section (32) in such a way that the waste in entry in the separator has a reduction speed that causes its fall on the collection base while the drying fluid is suctioned through the section (31).

Advantageously, a gasifier (50), into which at least a part of the WDC produced to obtain a Syngas is fed in, and a combustion section (60) of the Syngas obtained for the production of heat can be further comprised in line, and wherein the heat produced by the combustion of the Syngas is injected into a diathermic gas/oil exchanger to heat an organic fluid that performs a thermal dynamic cycle inside a turbo-generator for producing electric current and wherein, further, the heat produced by the combustion of the Syngas is re-circulated at least in part into a closed circuit (62) to re-conduct it to the drying section (6).

Although in the preceding paragraph the use of a specific turbine has been described, nothing excludes anyway the possibility of using other energetic production apparatus such as an endothermic engine or an internal combustion turbine.

### Brief description of drawings

Further characteristics and advantages of the present invention will result clearer with the description that follows of some embodiments, made to illustrate but not to limit, with reference to the annexed drawings, wherein:
- Figure 1 schematically shows in a flow chart the steps of the present method, in accordance with the preferred embodiment of the invention;
- Figure 2 schematizes a plant through which the method of figure 1 is realized for the production of WDC and its gasification for the production of electric current.
- Figure 3 shows in detail a part of the plant relative to the production of WDC and comprising the separation section of the dry waste from the humid waste and the purification of the metal and plastic impurities.
- Figure 4 shows in section a drier in accordance with the present invention, while figure 5 shows a phase of functioning of the same.
- Figure 6, last, shows the entire part of the plant relative only to the production of WDC.

### Description of some preferred embodiments

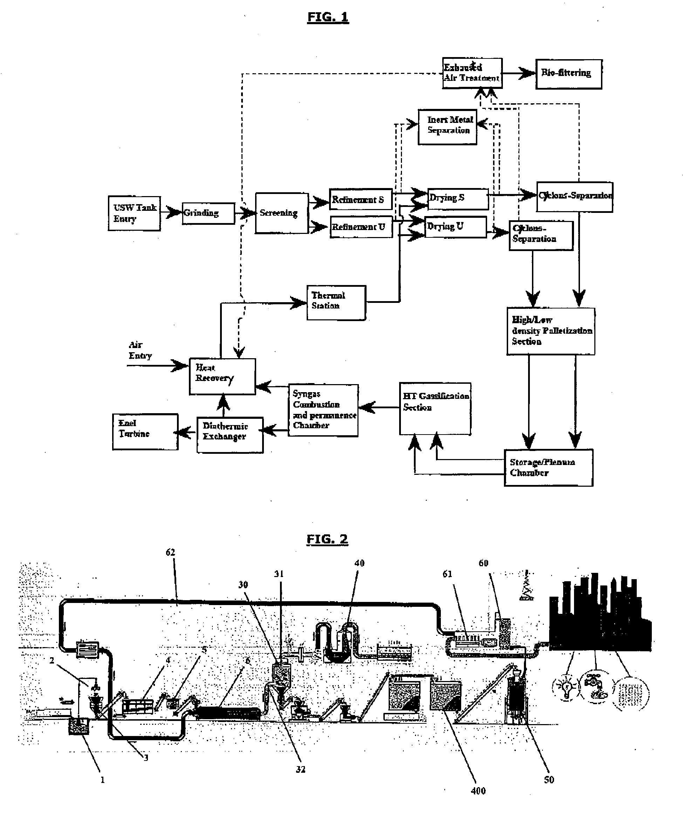

In figure 1 a flow chart is described that schematizes the "steps" in accordance to the present method. Figure 2 schematizes the plant as a whole for the production of a WDC and subsequent closed-cycle combustion to produce electric current.

With particular reference to figure 2, in an initial phase, the non-separated waste is arranged into a collection tank 1 where it is crammed before being lifted and let in along the transformation cycle.

Initially, the waste is lifted, for example with an orange-peel bucket 2, and inserted in an appropriate shredder unit 3 from which it exits triturated. The material in exit of the shredder unit falls on a conveyor belt which conducts it to an appropriate screening section 4 similar to a rotary or vibrating sieve where the waste is separated into dry and humid.

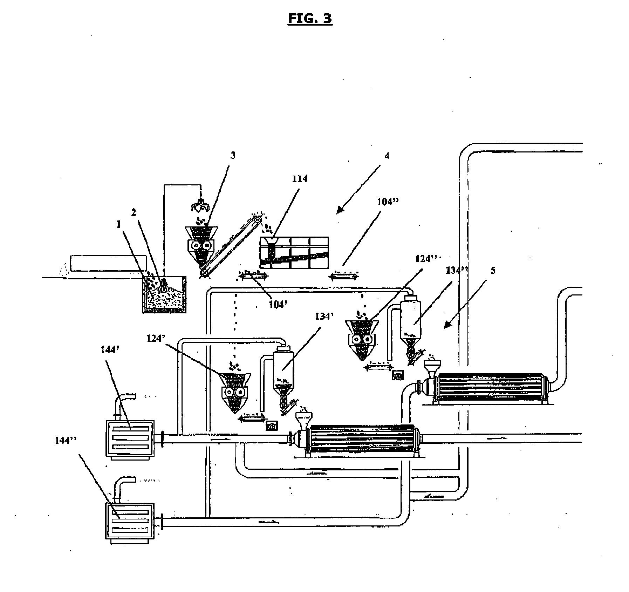

Figure 3 better shows in detail such a section 4. Generally, the screen is of the rotating-drum type 114 and realizes the screening of USW taking advantage of the different size and weight of the fractions to be selected, separating the feed flow into two currents. In the rotating-drum screen the separation of the single parts introduced in a fall current takes place on the basis of the different granulometries and weight. In such a manner, the parts having smaller pieces than the diameter of the holes of the screening net and greater weight (Humid-Organic Fraction) fall towards the bottom of the machine on the conveyor belt 104'. Instead, the parts having a greater size than the diameter of the holes of the screening net and minor weight (Dry - Inorganic Fraction) advance towards the top of the machine, as a consequence of the rotary movement, in the direction of the exit on the belt 104". Two different flows are thus formed, that is the humid-organic under-sieve flow and the dry-inorganic over-sieve flow. In such a manner, once the waste is subdivided into dry and humid, the part of dry waste follows a transformation path independent from that of the humid waste in such a way that a final WDC is obtained derived respectively only from the humid product and only from the dry product.

This differentiation that is made at the beginning of the process, although not essential in the carrying out of the process itself, allows anyway to obtain two different qualities of WDC and therefore to be able to differentiate the selling costs of the final product obtained.

The transformation path includes the entry of the dry waste and of the humid waste respectively in an own refinement section 5. As shown in detail in figure 3, the refinement phase consists of a secondary grinding into appropriate hoppers 124' and 124" where the waste is grinded due to the cut effect that each blade exerts on it when it is in contrast with the counter-rotating blade placed on its side. An appropriate definition grid binds the rotating grinders in such a way as to allow a granulometric definition of the grinded waste. Subsequently, it is foreseen a primary cyclone-separation 134' and 134" that allows to separate the heavy parts of the flow (aggregate/metals/heavy plastics PVC) that had not been intercepted yet from the rest of the waste and before entering in the drier. As in fact shown in figure 3, appropriate aspirators 144' and 144" create a calibrated depression to separate the heavy part from the rest of the waste, purifying it from all the eventual metal or plastic parts present. In such a manner, the waste that enters from one side of the cyclone-separator 134' or 134", through the belt below the grinders 124' or 124", is suctioned by the superior conduits connected to the aspirators 144' or 144".

Such purification process, although not essential, is important since it allows to eliminate undesired fractions (aggregate/PVC) that would influence negatively the final quality of the combustible obtained (WDC).

Once refined, the waste is dried in a drying section 6 (also in this case a specific section by type of waste, and therefore two sections in parallel, are included).

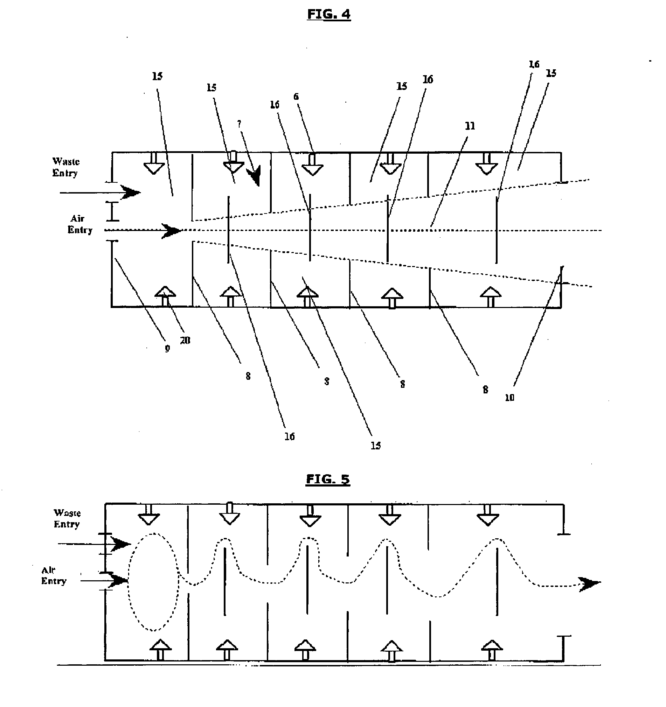

Each section 6, as better described in detail in figure 4, comprises a drier 6 that forms an internal chamber 7 provided with a succession of circular internal baffles 8, concentric and of variable diameter from the entry section 9 towards the exit section 10. In such a manner, a conic conduit 11 is formed for the passage of the grinded waste, that is widened progressively from the entry section 9 (where air and waste enter) towards the exit section 10 of the waste.

Each pair of baffles 8, opposed in succession, form an internal chamber 15 having an entry and an exit belonging to the cone 11 and wherein each one of the said chambers 15 is independent from the others, as better described in detail below, in such a way that the waste remains there for the necessary time to complete its drying. Inside a part of all the chambers 15 an intermediate baffle 16 that improves its functionality can also be eventually comprised.

The chamber further comprises an entry for the drying air (generally taken to a working temperature variable from 70°C to 150°C) and an entry for the waste.

Last, each chamber 15 comprises mixers 20 that are mobile blades to lift the waste deposited into the chamber and make it possible that it is intercepted by the air flow.

A first innovative aspect, particularly advantageous, concerns the fact that the entry of the air and of the waste take place from the same side (see figure 3). This makes possible that the waste impacts and is dragged by the hot drying air flow immediately after its entry in the drying section (in equi-current) when the waste is still impregnated with humidity and the air is still at the maximum of its drying temperature (it has not ceded heat to the waste yet). The great quantity of humidity present in the waste in entry absorbs immediately a great part of the heat, causing a good drying but at the same time lowering the temperature of the air and therefore avoiding the risk of fire of the waste itself.

In the traditional systems in counter-current, on the other hand, the hot air enters from the opposite side with respect to the side of entry of the waste and therefore impacts the waste when it has covered a certain path in the drier. In that sense, at the moment of the impact, the waste has already dried at least partially and risks of catching fire because of the impact with such hot air.

Subsequent figure 5 schematizes the functioning of such a drier 6. The air flow creates a circulation of the particles inside the first chamber 15. During such a circulation the greatest part of the heavy particles will fall on the bottom and will be put in a circle by the blades 20. As the permanence time passes, the particles that have dried become lighter and are able to be dragged by the air flow along the channel 11 (delimited by the cone in dotted line), while the others continue their permanence in the chamber. The cycle continues in succession passing from a chamber to the subsequent one where the section of the channel 11 is increased and the permanence is always on the basis of the degree of humidity and therefore of the weight of the particle. In fact, the concentric holes of the baffles 8 form a sort of sieve.

When the grinded particle of waste is out of such a section it means that it has reached the desired drying degree.

It is therefore evident that such a type of drier allows to select with great precision the degree of drying desired that wants to be obtained; in particular, the time of permanence does not result fixed but proportional to the humidity rate itself of the product.

Moreover, it is evident that with such a drying technology it is possible to introduce together fractions of waste with different humidity content in entry, obtaining a product in exit homogeneous and with the same humidity content. In fact, once the temperature of hot air in entry is fixed (in general within a range of 70-150°C), the higher or lower humidity of the waste is managed on the basis of a greater or minor permanence time of the waste itself inside the drier.

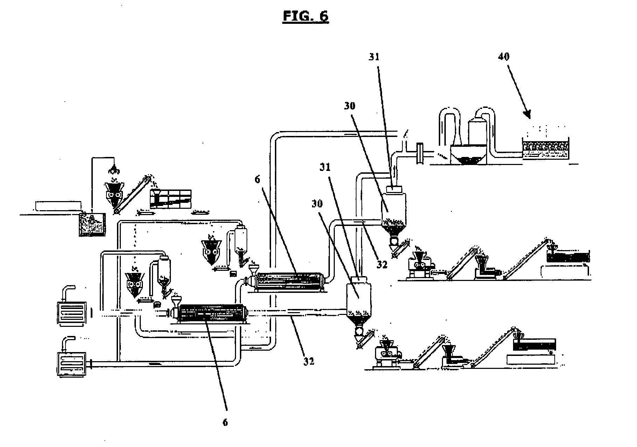

Once the dried waste is separated, it is thrust by the air flow (now loaded with humidity) into an appropriate aeraulic separator 30 where the air is separated from the waste. The separator 30 comprises a cylindrical chamber 30 that finishes with a funnel-like inferior section from which the waste separated from the air falls (see again figure 2 and also figure 6). The aeraulic separator 30 comprises a suction section 31 placed on the apex of the chamber 30 itself and that creates a suction depression. The humid air flow, which drags with it the dry dusts of waste, is therefore suctioned from such a depression by the entry conduit 32, which outlets into the chamber 30 itself, towards the suction section 31. The entry conduit 32 is arranged at a lower height with respect to the suction section 31 at a distance preferably of about one or two times the diameter of section of the chamber itself. Such a distance is essential since the air flow, at high speed into the restricted section of the entry conduit 32, reduces drastically its speed when it enters in the chamber of separation 30 of section much greater with respect to the entry section. This causes a drastic speed fall and a vorticose flow in ascent towards the suction section. Being the speed of the vortex low and the distance relatively big, the waste have time to fall by gravity to the bottom of the cylinder towards the funnel-like section of collection, while the air loaded with humidity together with the lighter dusts is suctioned through the section 31.

The dusts are then treated in a cleaning section 40 through high pressure water cleanings (about 4 bar) and then emitted in the atmosphere through the bio-filter.

The material in exit from the cyclone, instead, is compacted to form the final WDC 400. The WDC can then be launched directly in the market or at least in part (as shown in figure 2 and in the flow chart of figure 1) be re-used inside a subsequent process arranged in line with the process just described for the production of electric current.

In particular, a gasifier 50 is provided where part of all the WDC produced is fed in and which is able to produce a Syngas through a combustion with no oxygen. In particular, inside the gasifier 50 a containment chamber is comprised provided with primer burners in which embers of burnt WDC that self-feed are created once the process is started. The ashes fall on one side towards the bottom of the gas producer, while the result of the combustion, that is the Syngas, proceeds towards a combustion section 60 where the gas produced is burned to produce heat. The hot flue gas produced at about 900°C enter from one side in a heat exchanger 61 to heat a work fluid, that is a diathermic oil. The diathermic oil, around a temperature of 300°C, serves to heat an organic fluid that performs a thermodynamic cycle Rankin inside a turbo-generator to produce electric current. The cold flue gas, through the cession of the heat to the oil (around a temperature of 300°C), continue their closed-cycle path in the conduit 62 to connect to the drying section 6.

The part of the cycle that describes the gasification, although in line with the production cycle of the WDC, could also apply separately.

## Claims

1. A method for the treatment of waste (USW) for the production of a solid waste derived combustible(WDC) and comprising the sending of the waste (USW) along a transformation path that comprises the operations of:
- Drying of the waste and;
- Compaction of the dried waste to obtain the solid (WDC);
and **characterized in that** the said drying operation comprises the injection into a drying section (6) of a drying fluid and of the waste to be dried in such a way that the waste is dragged from the fluid from the entry (9) of the drying section (6) towards the exit (10), the drying section (6) comprising more than two chambers (15) arranged in succession and in fluid communication between them through a passage (11) at progressively widened section from a chamber (15) towards the subsequent one so that the waste in the entry of the drying section (6) on one side (9) passes to the subsequent chamber through the said passage (11) when a reduction of weight is obtained due to the progressive drying by the permanence in the said chamber in such a way as to be able to be intercepted and transported by the drying fluid towards the subsequent chamber through the passage (11) and wherein, further, inside a part of all the chambers (15), an intermediate baffle (16) is provided, the baffle being positioned such that to intercept the passage (11) and being positioned orthogonally respect to the direction of the passage (11).

2. A method, according to claim 1, wherein the drying fluid and the waste are introduced into the drying section (6) from the same side in equi-current.

3. A method, according to claim 1, wherein the drying fluid has a temperature comprised between 70°C and 150°C.

4. A method, according to claim 1, wherein after the said drying operation of the waste an operation of separation of the drying fluid of the waste from the dried waste into an aeraulic separator (30) is comprised and comprising the entry of the waste to be dried dragged by the drying fluid into the separator (30) through an entry (32) of the separator (30) and a suction from an exit (31) placed at a different height with respect to the entry part (32) and that creates a suction depression, the said height being at least equal or greater than the section of the separator (30) and wherein the said separator has a much greater section with respect to its entry section (32) in such a way that the flow of waste dragged in the separator has a speed fall in correspondence of its entry such as to fall by gravity on the bottom of the separator (30), while, the drying flow is suctioned through the exit (31).

5. A method, according to claim 1, wherein before the said drying operation a grinding operation of the waste and a subsequent screening of the grinded waste is comprised in such a way as to obtain humid-organic waste separated from the dry waste and form two distinct transformation paths.

6. A method, according to claim 5, wherein the said screening operation comprises the advancement of the waste along a rotating-drum screen having a net provided with screen holes in such a way that the parts that have smaller sizes than the diameter of the holes of the screening mat and greater weight fall towards the bottom of the machine on the conveyor belt (104'), while the parts having greater size than the diameter of the holes of the screening mat and minor weight advance towards the belt (104"), forming two distinct paths of humid-organic and dry waste.

7. A method, according to claim 1, wherein at the end of the production process of the solid WDC a subsequent gasification operation of the solid produced is comprised to obtain a Syngas and a subsequent combustion of the Syngas obtained for the production of heat and electric energy.

8. A method, according to claim 7, wherein the heat produced by the combustion of the Syngas is injected into a gas/oil diathermic exchanger to heat an organic fluid that performs a thermodynamic cycle inside a turbo-generator to produce electric current.

9. A method, according to claim 7 or 8, wherein the heat produced by the combustion of the Syngas is re-circulated at least in part in a closed circuit (62) to re-conduct it to the drying section (6).

10. A plant for the production of a solid waste derived combustible (WDC) from waste (USW) along a transformation path and comprising:
- A drying section (6) of the waste and;
- A compaction section of the waste to obtain the solid (WDC);
and **characterized in that** the said drying section comprises an entry (9) into which a drying fluid and the waste to be dried are injected in such a way that the waste is dragged by the fluid towards the exit section (10), the drying section (6) further comprising more than two chambers (15) arranged in succession and in fluid communication between them through a progressively widened section passage (11) from a chamber (15) towards the subsequent one in such a way that the waste in the entry of the drying section (6) from one side (9) passes to the subsequent chamber through the said passage (11) when a reduction of weight is obtained due to the progressive drying because of the permanence in the said chamber such as to lighten the waste so that the waste can be intercepted and transported away from the drying fluid towards the subsequent chamber through the passage (11) and wherein, further, inside a part of all the chambers (15), an intermediate baffle (16) is provided, the baffle being positioned such that to intercept the passage (11) and being positioned orthogonally respect to the direction of the passage (11).

11. A plant, according to claim 10, wherein the entry (9) comprises independent entries for the fluid and for the waste and arranged on the same side of the drying section (6) in such a way as to form a flow in equi-current.

12. A plant, according to claim 10, wherein each chamber (15) is separated from the subsequent one through a sieve (8) having an opening (11), each opening progressively widening from the entry (9) towards the exit (10) and wherein, further, the drying section (6) comprises one or more than one mechanical mixers (20) to remove the waste fallen on the bottom of the section (6) and let it in again in the drying flow.

13. A plant, according to claim 10, wherein before the said drying section (6) a screening section (4) of the waste is comprised in such a way as to obtain humid-organic waste separated from the dry waste and form two distinct transformation paths.

14. A plant, according to claim 10, wherein after the said drying section (6) the plant further comprises an aeraulic separator (30) to separate the drying gas of the waste from the dried waste and comprising an entry (32) for the drying fluid and waste, a suction section (31) of the drying fluid and a collection base of the waste separated from the drying fluid, the said separator having a much greater section with respect to its entry section (32) in such a way that the waste in entry in the separator has a speed fall that causes its fall on the collection base while the drying fluid is suctioned through the section (31).

15. A plant, according to one or more of the preceding claims from 10 to 14, wherein a gasifier (50) is further included into which at least a part of the WDC produced to obtain a Syngas is let in, and a combustion section (60) of the Syngas obtained for the production of heat and wherein the heat produced by the combustion of the Syngas is injected into a diathermic gas/oil exchanger to heat an organic fluid that performs a thermodynamic cycle inside a turbo-generator to produce electric current and wherein, further, the heat produced by the combustion of the Syngas is re-circulated at least in part in a closed circuit (62) to re-conduct it to the drying section (6).

## Patentansprüche

1. Verfahren zur Behandlung von Abfall (Hausmüll) zur Erzeugung eines festen Brennstoffs aus Müll (BRAM) und umfassend das Senden von Abfall (Hausmüll) auf einen Umwandlungsweg, der folgende Vorgänger umfasst:
- Trocknen des Abfalls und;
- Verdichten des getrockneten Abfalls zum Erhalt des Feststoffs (BRAM);
und **dadurch gekennzeichnet, dass** der Trocknungsvorgang das Einspritzen eines Trocknungsfluids und des zu trocknenden Abfalls in einen Trocknungsabschnitt (6) umfasst, sodass der Abfall von dem Fluid vom Einlass (9) des Trocknungsabschnitts (6) zum Auslass (10) transportiert wird, wobei der Trocknungsabschnitt (6) mehr als zwei nacheinander angeordnete Kammern (15) umfasst, die durch einen Kanal (11) mit einem vom einer Kammer (15) zur nächsten ständig größeren Querschnitt in Flüssigkeitsverbindung miteinander stehen, sodass der Abfall am Einlass des Trocknungsabschnitts (6) auf einer Seite (9) durch den Kanal (11) in die nächste Kammer gelangt, wenn aufgrund des zunehmenden Trocknens durch den Aufenthalt in der Kammer eine Gewichtsreduktion erreicht wird, sodass er vom Trocknungsfluid erfasst und durch den Kanal (11) zur nächsten Kammer transportiert werden kann, und wobei weiterhin in einem Teil aller Kammern (15) ein Schwallblech (16) angeordnet ist, wobei das Schwallblech derart positioniert ist, dass der Kanal (11) unterbrochen wird und es orthogonal in Bezug auf die Richtung des Kanals (11) angeordnet ist.

2. Verfahren nach Anspruch 1, wobei das Trocknungsfluid und der Abfall von derselben Seite mit gleicher Strömung in den Trocknungsabschnitt (6) eingebracht werden.

3. Verfahren nach Anspruch 1, wobei das Trocknungsfluid eine Temperatur zwischen 70°C und 150°C aufweist.

4. Verfahren nach Anspruch 1, wobei nach dem Trocknungsvorgang für den Abfall ein Vorgang des Trennens des Trocknungsfluids des Abfalls von dem getrockneten Abfall in einem Windsichter (30) vorgesehen ist, umfassend das Einbringen des von dem Trocknungsfluid transportierten, zu trocknenden Abfalls in den Sichter (30) durch einen Einlass (32) des Sichters (30) und ein Saugen von einem Auslass (31), der in einer anderen Höhe in Bezug auf den Einlassteil (32) angeordnet ist, wodurch ein Saugdruck geschaffen wird, wobei die Höhe mindestens gleich oder größer ist als der Querschnitt des Sichters (30) und wobei der Sichter in Bezug auf einen Einlassabschnitt (32) einen sehr viel größeren Querschnitt aufweist, sodass der in dem Sichter transportierte Abfallstrom einen Geschwindigkeitsabfall in Bezug auf seinen Einlass aufweist, sodass er durch die Schwerkraft auf den Boden des Sichters (30) fällt, während der Trocknungsstrom durch den Auslass (31) abgesaugt wird.

5. Verfahren nach Anspruch 1, wobei vor dem Trocknungsvorgang ein Vermahlungsvorgang für den Abfall und ein anschließendes Sieben des gemahlenen Abfalls vorgesehen ist, um eine feucht-organische Abfallfraktion zu erhalten, die von dem trockenen Abfall getrennt ist und zwei unterschiedliche Umwandlungswege gebildet werden.

6. Verfahren nach Anspruch 5, wobei der Siebvorgang das Vorschieben des Abfalls entlang eines Siebs in Form einer rotierenden Trommel mit einem Netz mit Maschenlöchern umfasst, sodass die Teile mit einer geringeren Größe als dem Durchmesser der Löcher des Siebs und einem höheren Gewicht auf den Boden der Maschine auf das Förderband (104') fallen, während die Teile mit einer größeren Größe als dem Durchmesser der Löcher des Siebs und einem geringeren Gewicht zu dem Band (104'') vorgeschoben werden, wobei zwei unterschiedliche Umwandlungswege für feucht-organischen und trockenen Abfall gebildet werden.

7. Verfahren nach Anspruch 1, wobei am Ende des Erzeugungsprozesses des festen BRAM ein anschließender Vergasungsvorgang des erzeugten Feststoffs vorgesehen ist, um ein Synthesegas zu erhalten, sowie eine anschließende Verbrennung des erhaltenen Synthesegases zur Erzeugung von Wärme und elektrischer Energie.

8. Verfahren nach Anspruch 7, wobei die durch die Verbrennung des Synthesegases erzeugte Wärme in einen Wärmetauscher für diathermisches Gas/Öl geleitet wird, um ein organisches Fluid zu erwärmen, das im Inneren eines Turbinengenerators einen thermodynamischen Zyklus zur Erzeugung von elektrischem Strom durchläuft.

9. Verfahren nach Anspruch 7 oder 8, wobei die durch die Verbrennung des Synthesegases erzeugte Wärme mindestens teilweise in einem geschlossenen Kreislauf (62) rezirkuliert wird, um sie erneut dem Trocknungsabschnitt (6) zuzuführen.

10. Anlage zur Erzeugung eines festen Brennstoffs aus Müll (BRAM) aus Abfall (Hausmüll) auf einem Umwandlungsweg und umfassend:
- einen Trocknungsabschnitt (6) für den Abfall und;
- einen Verdichtungsabschnitt für den Abfall zum Erhalt des Feststoffs (BRAM);
und **dadurch gekennzeichnet, dass** der Trocknungsabschnitt einen Einlass (9) umfasst, in den ein Trocknungsfluid und der zu trocknende Abfall eingespritzt werden, sodass der Abfall von dem Fluid zum Auslassabschnitt (10) transportiert wird, wobei der Trocknungsabschnitt (6) weiterhin mehr als zwei nacheinander angeordnete Kammern (15) umfasst, die durch einen Kanal (11) mit einem von einer Kammer (15) zur nächsten ständig größeren Querschnitt in Flüssigkeitsverbindung miteinander stehen, sodass der Abfall am Einlass des Trocknungsabschnitts (6) auf einer Seite (9) durch den Kanal (11) in die nächste Kammer gelangt, wenn aufgrund des zunehmenden Trocknens durch den Aufenthalt in der Kammer eine Gewichtsreduktion erreicht wird, sodass der Abfall leichter wird, sodass der Abfall vom Trocknungsfluid erfasst und durch den Kanal (11) zur nächsten Kammer transportiert werden kann, und wobei weiterhin in einem Teil aller Kammern (15) ein Schwallblech (16) angeordnet ist, wobei das Schwallblech derart positioniert ist, dass der Kanal (11) unterbrochen wird und es orthogonal in Bezug auf die Richtung des Kanals (11) angeordnet ist.

11. Anlage nach Anspruch 10, wobei der Einlass (9) unabhängige Einlässe für das Fluid und für den Abfall umfasst, die auf derselben Seite des Trocknungsabschnitts (6) derart angeordnet sind, dass ein Strom in gleicher Strömungsrichtung erzeugt wird.

12. Anlage nach Anspruch 10, wobei jede Kamera (15) von der folgenden, durch ein Sieb (8) mit einer Öffnung (11) getrennt ist, wobei jede Öffnung vom Einlass (9) zum Auslass (10) zunehmend größer wird, und wobei der Trocknungsabschnitt (6) weiterhin einen oder mehr als einen mechanischen Mixer (20) zum Entfernen von auf den Boden des Abschnitts (6) gefallenen Abfall und zur Wiedereinführung in den Trocknungsstrom umfasst.

13. Anlage nach Anspruch 10, wobei vor dem Trocknungsabschnitt (6) ein Siebabschnitt (4) für den Abfall vorgesehen ist, um eine feucht-organische Abfallfraktion zu erhalten, die von dem trockenen Abfall getrennt ist und zwei unterschiedliche Umwandlungswege gebildet werden.

14. Anlage nach Anspruch 10, wobei nach dem Trocknungsabschnitt (6) der Anlage weiterhin ein Windsichter (30) zum Trennen des Trocknungsgases des Abfalls von dem getrockneten Abfall vorgesehen ist, umfassend einen Einlass (32) für das Trocknungsfluid und den Abfall, einen Saugabschnitt (31) für das Trocknungsfluid und ein Sammelbecken für den von dem Trocknungsfluid getrennten Abfall, wobei der Sichter einen sehr viel größeren Querschnitt in Bezug auf seinen Einlassabschnitt (32) aufweist, sodass der Abfall im Einlass des Sichters einen Geschwindigkeitsabfall in Bezug auf seinen Einlass aufweist, sodass er in das Sammelbecken fällt, während das Trocknungsfluid durch den Auslass (31) abgesaugt wird.

15. Anlage nach einem oder mehreren der vorstehenden Ansprüche 10 bis 14, wobei weiterhin ein Vergaser (50) eingeschlossen ist, in den mindestens ein Teil des erzeugten BRAM zum Erhalt von Synthesegas geführt wird, und ein Verbrennungsabschnitt (60) für das erhaltene Synthesegas zur Erzeugung von Wärme und wobei die durch die Verbrennung des Synthesegases erzeugte Wärme in einen Wärmetauscher für diathermisches Gas/Öl geleitet wird, um ein organisches Fluid zu erwärmen, das im Inneren eines Turbinengenerators einen thermodynamischen Zyklus zur Erzeugung von elektrischem Strom durchläuft, und wobei weiterhin die durch die Verbrennung des Synthesegases erzeugte Wärme mindestens teilweise in einem geschlossenen Kreislauf (62) rezirkuliert wird, um sie erneut dem Trocknungsabschnitt (6) zuzuführen.

## Revendications

1. Procédé pour le traitement des déchets (USW) destiné à la production d'un combustible dérivé de déchets solides (WDC) et comprenant l'envoi des déchets (USW) le long d'un parcours de transformation qui comprend les opérations suivantes :
- séchage des déchets et ;
- compactage des déchets séchés afin d'obtenir le solide (WDC) ;
et **caractérisé en ce que** ladite opération de séchage comprend l'injection dans une partie de séchage (6) d'un liquide de séchage et des déchets à sécher de telle sorte que les déchets sont entraînés dans le liquide depuis l'entrée (9) de la partie de séchage (6) vers la sortie (10), la partie de séchage (6) comprenant plus de deux chambres (15) agencées les unes à la suite des autres et en communication fluidique les unes avec les autres par le biais d'un passage (11) au niveau d'une partie d'une chambre (15) qui s'élargit progressivement vers la chambre suivante, de sorte que les déchets à l'entrée de la partie de séchage (6) d'un côté (9) passent à la chambre suivante par ledit passage (11) lorsqu'une réduction de poids est obtenue en raison du séchage progressif du fait du maintien dans ladite chambre de façon à pouvoir être interceptés et transportés par le liquide de séchage vers la chambre suivante par le passage (11) et dans lequel, en outre, à l'intérieur d'une partie de toutes les chambres (15), un déflecteur intermédiaire (16) est prévu, le déflecteur étant positionné de façon à intercepter le passage (11) et étant positionné de façon perpendiculaire au sens du passage (11).

2. Procédé selon la revendication 1, dans lequel le liquide de séchage et les déchets sont introduits dans la partie de séchage (6) depuis le même côté à co-courant.

3. Procédé selon la revendication 1, dans lequel le liquide de séchage a une température comprise entre 70 °C et 150 °C.

4. Procédé selon la revendication 1, dans lequel après ladite opération de séchage des déchets, une opération de séparation du liquide de séchage des déchets et des déchets séchés dans un séparateur aéraulique (30) est prévue et comprend l'entrée des déchets à sécher entraînés par le liquide de séchage dans le séparateur (30) par une entrée (32) du séparateur (30) et une aspiration depuis une sortie (31) placée à une hauteur différente par rapport à la partie d'entrée (32) et qui crée une dépression d'aspiration, ladite hauteur étant au moins égale ou supérieure à la partie du séparateur (30) et dans lequel ledit séparateur a une partie beaucoup plus grande que sa partie d'entrée (32) de sorte que l'écoulement des déchets entraînés dans le séparateur a une vitesse correspondant à son entrée de façon à tomber par gravité au fond du séparateur (30), tandis que l'écoulement de séchage est aspiré par la sortie (31).

5. Procédé selon la revendication 1, dans lequel, avant ladite opération de séchage, une opération de broyage des déchets et un tri ultérieur des déchets broyés sont prévus, de façon à obtenir des déchets organiques humides séparés des déchets secs et à former deux parcours de transformations distincts.

6. Procédé selon la revendication 5, dans lequel ladite opération de tri comprend la progression des déchets le long d'un treillis à tambour rotatif muni d'un filet comportant des trous de tamisage de sorte que les parties dont la taille est plus petite que le diamètre des trous du treillis et un poids supérieur tombent au fond de la machine sur la bande transporteuse (104'), tandis que les parties dont la taille est supérieure au diamètre des trous du treillis et un poids inférieur avancent vers la bande (104"), formant ainsi deux trajectoires distinctes de déchets organiques humides et de déchets secs.

7. Procédé selon la revendication 1, dans lequel, à la fin du procédé de production des WDC solides, une opération ultérieure de gazéification du solide produit est prévue, afin d'obtenir un gaz de synthèse et une combustion ultérieure du gaz de synthèse obtenu pour la production de chaleur et d'énergie électrique.

8. Procédé selon la revendication 7, dans lequel la chaleur produite par la combustion du gaz de synthèse est injectée dans un échangeur diathermique gaz/huile afin de chauffer un liquide organique qui réalise un cycle thermodynamique à l'intérieur d'un turbogénérateur afin de produire du courant électrique.

9. Procédé selon la revendication 7 ou 8, dans lequel la chaleur produite par la combustion du gaz de synthèse est remise en circulation au moins en partie dans un circuit fermé (62) afin de la reconduire dans la partie de séchage (6).

10. Usine pour la production d'un combustible dérivé de déchets solides (WDC) issu de déchets (USW) le long d'un parcours de transformation et comprenant :
- une partie de séchage (6) des déchets et ;
- une partie de compactage des déchets pour obtenir le solide (WDC) ;
et **caractérisé en ce que** ladite partie de séchage comprend une entrée (9) dans laquelle un liquide de séchage et les déchets à sécher sont injectés de sorte que les déchets sont entraînés par le liquide vers la partie de sortie (10), la partie de séchage (6) comprenant en outre plus de deux chambres (15) agencées les unes à la suite des autres et en communication fluidique les unes avec les autres par l'intermédiaire d'un passage (11) dont la section s'élargit progressivement depuis une chambre (15) vers la chambre suivante, de telle sorte que les déchets dans l'entrée de la partie de séchage (6) d'un côté (9) passent dans la chambre suivante par ledit passage (11) lorsqu'une réduction de poids est obtenue raison du séchage progressif du fait du maintien dans ladite chambre de façon à alléger les déchets afin que les déchets puissent être interceptés et transportés à l'écart du liquide de séchage vers la chambre suivante par le passage (11) et dans lequel, en outre, à l'intérieur d'une partie de toutes les chambres (15), un déflecteur intermédiaire (16) est prévu, le déflecteur étant positionné de façon à intercepter le passage (11) et étant positionné de façon perpendiculaire au sens du passage (11).

11. Usine, selon la revendication 10, dans laquelle l'entrée (9) comprend des entrées indépendantes pour le liquide et pour les déchets et agencées du même côté de la partie de séchage (6) de façon à former un écoulement à co-courant.

12. Usine, selon la revendication 10, dans laquelle chaque chambre (15) est séparée de la chambre suivante par un tamis (8) muni d'une ouverture (11), chaque ouverture s'élargissant progressivement depuis l'entrée (9) vers la sortie (10) et dans laquelle, en outre, la partie de séchage (6) comprend un ou plusieurs mélangeurs mécaniques (20) pour retirer les déchets tombés au fond de la partie (6) et les reconduire dans l'écoulement de séchage.

13. Usine, selon la revendication 10, dans laquelle, avant ladite partie de séchage (6), une partie de tamisage (4) des déchets est prévue de façon à obtenir des déchets organiques humides séparés des déchets secs et à former deux parcours de transformations distincts.

14. Usine, selon la revendication 10, dans laquelle, après ladite partie de séchage (6), l'usine comprend en outre un séparateur aéraulique (30) destiné à séparer le gaz de séchage des déchets des déchets séchés et comprenant une entrée (32) pour le liquide de séchage et les déchets, une partie d'aspiration (31) du liquide de séchage et une base de collecte des déchets séparés du liquide de séchage, ledit séparateur ayant une partie beaucoup plus grande que sa partie d'entrée (32) de sorte que les déchets dans l'entrée du séparateur ont une vitesse qui les fait tomber sur la base de collecte tandis que le liquide de séchage est aspiré par la partie (31).

15. Usine, selon une ou plusieurs des revendications 10 à 14, dans laquelle un gazéifieur (50) est en outre prévu, dans lequel au moins une partie des WDC produits pour obtenir un gaz de synthèse est laissée à l'intérieur, et une partie de combustion (60) du gaz de synthèse obtenu pour la production de chaleur et dans laquelle la chaleur produite par la combustion du gaz de synthèse est injectée dans un échangeur diathermique gaz/huile pour chauffer un liquide organique qui réalise un cycle thermodynamique à l'intérieur d'un turbogénérateur afin de produire du courant électrique et dans laquelle, en outre, la chaleur produite par la combustion du gaz de synthèse est remise en circulation au moins en partie dans un circuit fermé (62) afin de la reconduire vers la partie de séchage (6).
